# EUROPEAN PATENT APPLICATION

(11) **EP 1 640 260 A2**
(43) Date of publication of application: **29.03.2006**
(21) Application number: 05020967.5
(22) Date of filing: 26.09.2005
(51) Int. Cl.: B62M 9/12

(54) **Front derailleur mounting arrangement**

(30) Priority: 28.09.2004 US 950632
(71) Applicant: SHIMANO INC., Osaka 590-8577 (JP)
(72) Inventor: Oi, Takeshi, Sakai Osaka 590-0111 (JP)
(74) Representative: GROSSE BOCKHORNI SCHUMACHER

(57) **Abstract**

A front derailleur mounting arrangement includes a bottom bracket tube 16 having a plurality of slots 16c and a front derailleur mounting bracket 18 having a complementary mounting structure that is configured to mate with the slots 16c. The slots 16c and the complementary mounting structure are configured to retain the front derailleur mounting bracket 18 in a predetermined rotational orientation and a predetermined axial orientation on an axial end edge of the bottom bracket tube 16 prior to threading of a bottom bracket 20 within the interior threaded passage of the bottom bracket tube 16.

## Description

### BACKGROUND OF THE INVENTION

### Field of the Invention

This invention generally relates to a front derailleur for a bicycle. More specifically, the present invention relates a front derailleur mounting arrangement that mounts the front derailleur to a bottom bracket.

### Background Information

Bicycling is becoming an increasingly more popular form of recreation as well as a means of transportation. Moreover, bicycling has become a very popular competitive sport for both amateurs and professionals. Whether the bicycle is used for recreation, transportation or competition, the bicycle industry is constantly improving the various components of the bicycle. The various components of the bicycle are usually mounted to the bicycle frame. One part of the bicycle that have been constantly been redesigned is the frame of the bicycle. The frame of the bicycle is often made to be as lightweight as possible. Moreover, the overall shape of the bicycle frame may be changed from the classic shape to accommodate various components.

In recent years, bicycle frames have been provided with rear suspensions. As result of these rear suspensions, often the seat tube of the bicycle frame is removed or cut away to accommodate the rear suspension. Generally, a front derailleur is typically secured to the seat tube of the bicycle frame and/or the bottom bracket of the bicycle. In order to accommodate a seat tube type of front derailleur mounting arrangement, a short seat tube must be left or added to the bicycle frame. However, in some instances it is not possible to add an additional piece of framing material where the seat tube is normally located. In such circumstances, a bottom bracket type of front derailleur mounting arrangement must be utilized. One problem with the bottom bracket type of front derailleur mounting arrangement is that it is sometimes difficult to install. In other words, the installer usually must hold the mounting bracket while installing the bottom bracket into the bottom bracket tube of the frame. Thus, the installer can only use one hand to thread the bottom bracket into the seat tube. This can be difficult since the bottom bracket is often installed utilizing a pneumatic tool that can be heavy and/or awkward to handle with one hand.

Moreover, recently, the bottom bracket tube of the bicycle frame has recently become larger to accommodate various types of frame designs. This increase in the size of the bottom bracket tube of the bicycle frame increase the overall weight of the bicycle. This increased weight is undesirable, even if a larger bottom bracket tube is needed and/or desired.

In view of the above, it will be apparent to those skilled in the art from this disclosure that there exists a need for an improved front derailleur mounting arrangement. This invention addresses this need in the art as well as other needs, which will become apparent to those skilled in the art from this disclosure.

### SUMMARY OF THE INVENTION

One object of the present invention is to provide a front derailleur mounting arrangement that reduces the weight of the bottom bracket tube.

Another object of the present invention is to provide a front derailleur mounting arrangement that aids in the mounting of the bottom bracket and the front derailleur to the bicycle frame.

Another object of the present invention is to provide a front derailleur mounting arrangement that relatively simple and inexpensive to manufacture and assembly.

The foregoing objects can basically be attained by providing a front derailleur mounting arrangement comprising a bottom bracket tube and a front derailleur mounting bracket. The bottom bracket tube has an interior passage with a center axis and plurality of slots. The front derailleur mounting bracket includes a lower attachment portion with a bottom bracket opening and a complementary mounting structure, and an upper derailleur support portion extending from the lower attachment portion. The upper derailleur support portion has a derailleur mounting part. The complementary mounting structures is configured to mate with the slots retain the front derailleur mounting bracket in a predetermined rotational orientation and a predetermined axial orientation on an axial end edge of the bottom bracket tube prior to threading of a bottom bracket within the interior threaded passage of the bottom bracket tube.

These and other objects, features, aspects and advantages of the present invention will become apparent to those skilled in the art from the following detailed description, which, taken in conjunction with the annexed drawings, discloses preferred embodiments of the present invention.

### BRIEF DESCRIPTION OF THE DRAWINGS

Referring now to the attached drawings which form a part of this original disclosure:
Figure 1 is a side elevational view of a bicycle with a front derailleur in accordance with the present invention;
Figure 2 is an enlarged partial side elevational view of a portion of the bicycle frame with the front derailleur mounted to the bottom bracket by a front derailleur mounting member in accordance with a first embodiment of the present invention;
Figure 3 is a rear view of the portion of the bicycle frame, the front derailleur and the front derailleur mounting member illustrated in Figure 2;
Figure 4 is a rear end exploded elevational view of a portion of the bicycle frame, the bottom bracket, the front derailleur mounting member in accordance with the first embodiment of the present invention illustrated in Figures 2 and 3;
Figure 5 is an inside elevational view of the front derailleur mounting member in accordance with the first embodiment of the present invention illustrated in Figures 2-4;
Figure 6 is a partial exploded perspective view of a portion of the bottom bracket tube of the bicycle frame, the front derailleur mounting member and the bottom bracket illustrated in Figures 2-5;
Figure 7 is a partial top plan view of a portion of the bottom bracket tube of the bicycle frame with the front derailleur mounting member shown in partial cross section illustrated in Figures 2-6;
Figure 8 is a partial exploded perspective view of a portion of the bottom bracket tube of the bicycle frame and the front derailleur mounting member in accordance with the first embodiment of the present invention;
Figure 9 is an axial cross sectional view of the bottom bracket tube of the bicycle frame as seen along section line 9-9 of Figure 8;
Figure 10 is an axial cross sectional view, similar to Figure 9, of a first modified bottom bracket tube for the bicycle frame of Figure 1;
Figure 11 is an axial cross sectional view, similar to Figure 9, of a second modified bottom bracket tube for the bicycle frame of Figure 1;
Figure 12 is a partial exploded perspective view of a portion of the bottom bracket tube of the bicycle frame and the front derailleur mounting member in accordance with another embodiment of the present invention;
Figure 13 is a partial exploded perspective view of a portion of the step-shaped bottom bracket tube of the bicycle frame and the front derailleur mounting member in accordance with another embodiment of the present invention;
Figure 14 is an axial cross sectional view of the step-shaped bottom bracket tube of the bicycle frame as seen along section line 14-14 of Figure 13;
Figure 15 is an axial cross sectional view, similar to Figure 14, of a first modified step-shaped bottom bracket tube for the bicycle frame of Figure 1;
Figure 16 is an axial cross sectional view, similar to Figure 14, of a second modified step-shaped bottom bracket tube for the bicycle frame of Figure 1;
Figure 17 is a partial exploded perspective view of a portion of the step-shaped bottom bracket tube of the bicycle frame and the front derailleur mounting member in accordance with another embodiment of the present invention;
Figure 18 is a partial exploded perspective view of a portion of the bottom bracket tube of the bicycle frame and the front derailleur mounting member in accordance with another embodiment of the present invention;
Figure 19 is a partial exploded perspective view of a portion of the bottom bracket tube of the bicycle frame and the front derailleur mounting member in accordance with another embodiment of the present invention;
Figure 20 is a partial exploded perspective view of a portion of the bottom bracket tube of the bicycle frame and the front derailleur mounting member in accordance with another embodiment of the present invention;
Figure 21 is an axial end elevational view of the bottom bracket tube of the bicycle frame in accordance with another embodiment of the present invention;
Figure 22 is an axial cross sectional view of the step-shaped bottom bracket tube of the bicycle frame as seen along section line 22-22 of Figure 21;
Figure 23 is an axial end elevational view of the bottom bracket tube of the bicycle frame in accordance with another embodiment of the present invention;
Figure 24 is an axial cross sectional view of the bottom bracket tube of the bicycle frame as seen along section line 24-24 of Figure 23;
Figure 25 is an axial end elevational view of the bottom bracket tube of the bicycle frame in accordance with another embodiment of the present invention; and
Figure 26 is an axial cross sectional view of the bottom bracket tube of the bicycle frame as seen along section line 26-26 of Figure 25.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

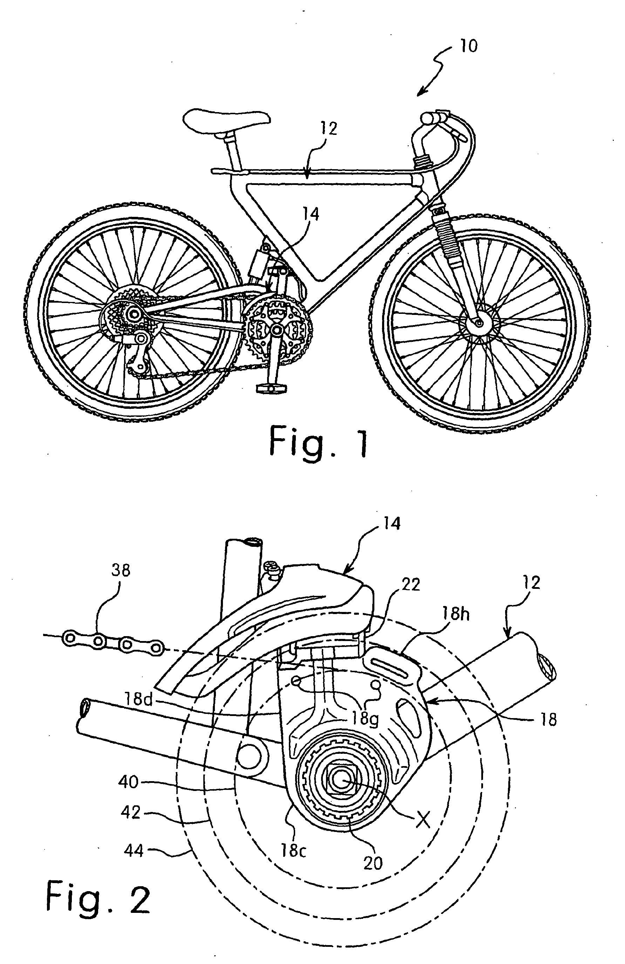

Referring initially to Figures 1-3, a bicycle 10 is illustrated having a frame 12 with a front derailleur 14 fixedly coupled to a bottom bracket tube 16 of the frame 12 via a front derailleur mounting bracket or plate 18 in accordance with a first embodiment of the invention. As explained below, the front derailleur mounting bracket 18 is designed aid in the mounting of the front derailleur 14. Moreover, the front derailleur mounting bracket 18 is especially useful with a bicycle frame that does not have a seat tube such as the frame 12 illustrated herein. In other words, the front derailleur mounting bracket 18 is fixedly secured to the bottom bracket tube 16 of the frame 12 by a bottom bracket 20.

Bicycles and their various components are well known in the art, and thus, bicycle 10 and its various components will not be discussed or illustrated in detail herein except for the components that relate to the present invention. In other words, only front derailleur 14 and the components that relate thereto will be discussed and/or illustrated herein. As used herein, the terms "laterally toward the bicycle," "laterally away from the bicycle," "upper," "lower," "forward", "rearward", "upward", "above", "downward", "below" and "transverse" refer to those directions of a bicycle in its normal riding position, to which front derailleur 14 is attached by the front derailleur mounting bracket or plate 18. Accordingly, these terms, as utilized to describe the front derailleur 14 in the claims, should be interpreted relative to bicycle 10 in its normal riding position. In other words, as used herein, these terms are to be determined from Figures 1 and 2, where the forward or front direction is toward the right in Figures 1 and 2, and the rear or back direction is toward the left in Figures 1 and 2.

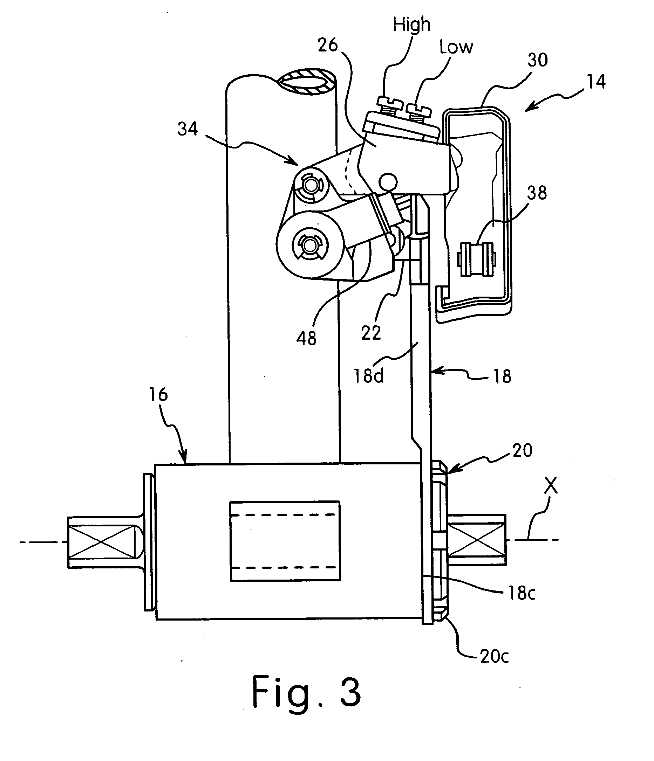

As best seen in Figure 3, the front derailleur 14 basically includes a fixed base member 22 for mounting the front derailleur 14 to the bicycle frame 12, a movable member 26 supporting a chain guide 30, and a linkage mechanism 34 for coupling the movable member 26 to the base member 22. The chain guide 30 acts as a guide for moving the chain 38 between a small sprocket 40, a middle sprocket 42 and a large sprocket 44 in response to tension applied by a derailleur cable (not shown) to an actuating arm 48 in a known manner. The front derailleur 14 is operated by movement of a shifting unit (not shown) in a conventional manner. The front derailleurs are conventional components that are well known in the art. Since front derailleurs are well known in the art, the front derailleur 14 will not be discussed or illustrated in detail herein. Figure 2 is a side view of a portion of the frame 12 that includes the bottom bracket tube 16 on which the front derailleur 14 is mounted using the mounting plate 18 according to the present invention as explained below.

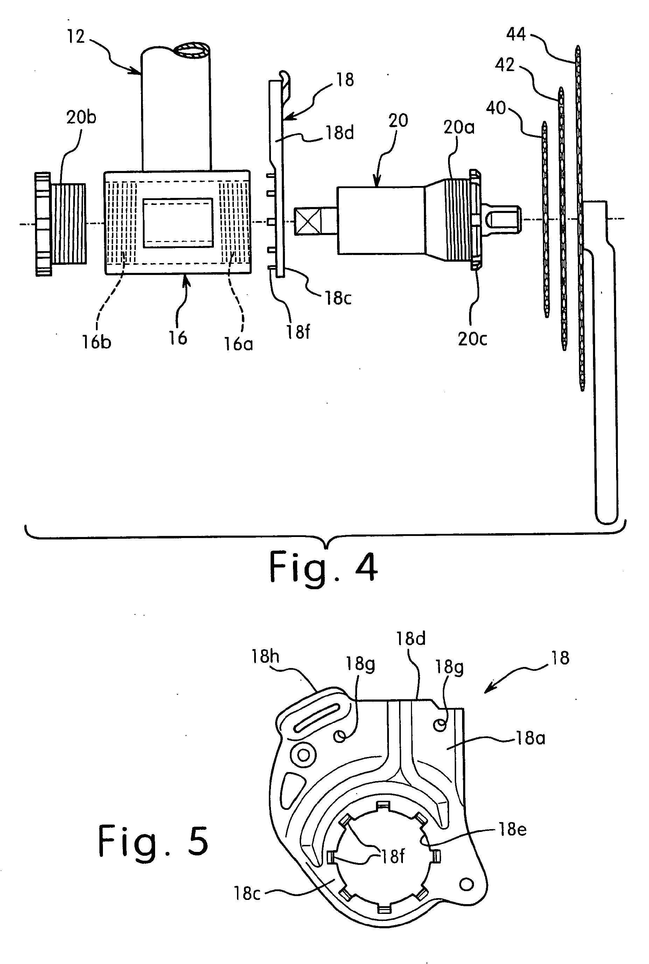

As best seen in Figure 4, the bottom bracket tube 16 of the frame 12 is a hollow tubular member with an interior passage having a center longitudinal axis X. Each end of the bottom bracket tube 16 includes a threaded portion 16a and 16b, respectively, to securely fasten the bottom bracket 20 therein. The bottom brackets are conventional components that are well known in the art. Since bottom brackets are well known in the art, the bottom bracket 20 will not be discussed or illustrated in detail herein. Preferably, the threaded portion 16a has right hand threads, while the threaded portion 16b has left hand threads. The threaded portion 16a threadedly engages the right hand threads 20a of the bottom bracket 20, while the threaded portion 16b threadedly engages the left hand threads 20b of the bottom bracket 20. The bottom bracket 20 has a flange 20c that contacts the front derailleur mounting bracket 18 when the bottom bracket 20 is screwed into the opening of the bottom bracket tube 16 to retain the front derailleur mounting bracket 18 to the bottom bracket tube 16 of the frame 12.

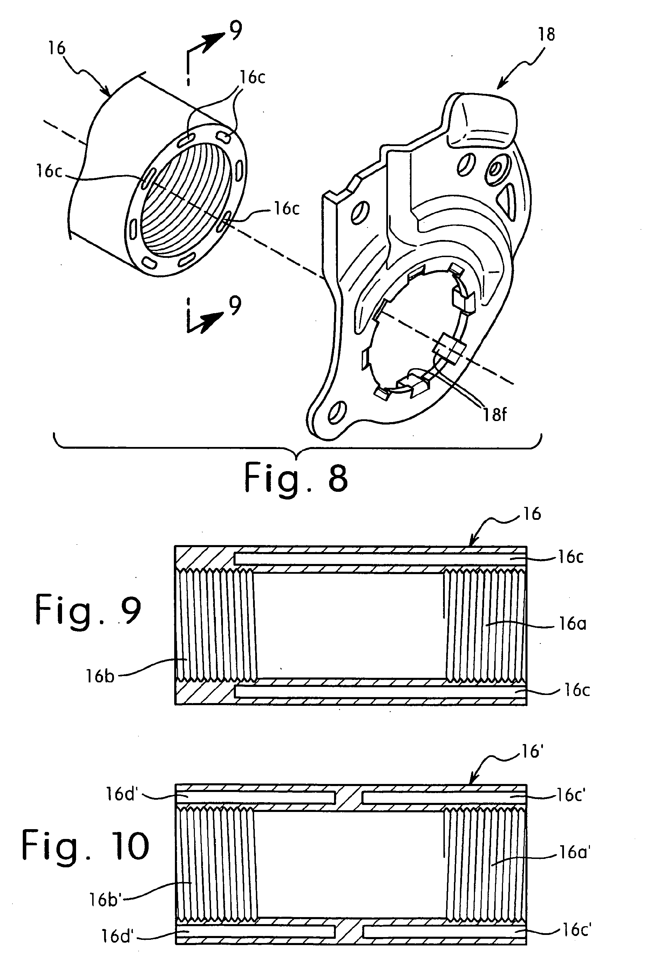

As best seen in Figures 8 and 9, the bottom bracket tube 16 of the frame 12 has a plurality of slot 16c that forms a first complementary mounting structure for aiding in the assembly of the bottom bracket 20 and the front derailleur mounting bracket 18 to the bottom bracket tube 16. The slots 16c is configured to retain the front derailleur mounting bracket 18 in a predetermined rotational orientation and a predetermined axial orientation on an axial end edge of the bottom bracket tube 16 prior to threading of the bottom bracket 20 within the interior threaded passage of the bottom bracket tube 16 as discussed below in more detail. Accordingly, the installer needs to only insert a one end of the bottom bracket 20 within the interior threaded passage of the bottom bracket tube 16 to support the front derailleur mounting bracket 18 in the correct orientation. This allows to the installer to let go of the front derailleur mounting bracket 18 and use two hands to install the bottom bracket 20 within the interior threaded passage of the bottom bracket tube 16 with an air wrench.

The slots 16c are formed in the axial end edge of the bottom bracket tube 16, and are uniformly spaced apart in a first circumferential pattern. In this embodiment, the slots 16c are blind bores formed in a first axial facing end surface or axial end edge of the bottom bracket tube 16. The slots 16c are arc shaped as view in an axial direction along the bottom bracket tube 16. In this embodiment, the slots 16c extend at least half of the axial length of the bottom bracket tube 16 to reduce the weight of the bottom bracket tube 16. More preferably, the axial lengths of the slots 16c are at least three quarters of the axial length of the bottom bracket tube 16 to reduce the weight of the bottom bracket tube 16.

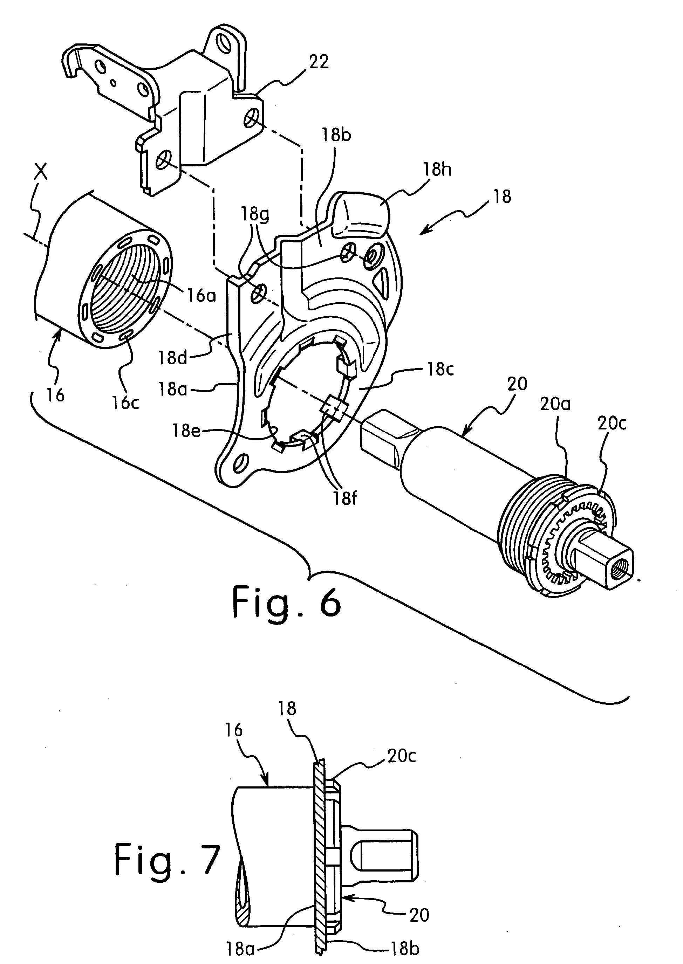

Referring to Figures 5-8, the front derailleur mounting plate 18 can be formed from any suitable material, including, but not limited to, plastic, fiberglass, aluminum, steel, etc. The front derailleur mounting plate 18 basically includes a support or plate body having a first side 18a for facing laterally toward the bicycle frame 12 and a second side 18b for facing laterally away from the bicycle frame 12. The first side 18a is illustrated in Figure 5, while the second side 18b is illustrated in Figure 6. The front derailleur mounting plate 18 is preferably a one-piece, unitary member having a lower attachment portion 18c and an upper derailleur support portion 18d extending from the lower attachment portion 18c. The lower attachment portion 18c has a bottom bracket opening 18e and a plurality of mounting projections 18f. The upper derailleur support portion 18d extends upwardly from the lower attachment portion 18c. The upper derailleur support portion 18d has a pair of holes 18g that form a derailleur mounting part. More specifically, the fixed base member 22 is fixedly secured to the upper derailleur support portion 18d by a pair of fasteners (not shown) that extend through the holes 18g.

The lower attachment portion 18c of the support body has the bottom bracket opening 18e that aligns with bottom bracket 20. In this embodiment, the bottom bracket opening 18e has substantially the same diameter as the corresponding opening of the interior passage of the bottom bracket tube 16 of the bicycle frame 12. In any event, the first side 18a of the lower attachment portion 18c aligns with the bottom bracket tube 16 when the front derailleur mounting plate 18 is mounted to bicycle frame 12.

The mounting projections 18f form a second complementary mounting structure that is configured to mate with the slots 16c to retain the front derailleur mounting bracket 18 in a predetermined rotational orientation and a predetermined axial orientation on an axial end edge of the bottom bracket tube 16 prior to threading of the bottom bracket 20 within the interior threaded passage of the bottom bracket tube 20. Thus, the slots 16c and the mounting projections 18f aid in the assembly of the bottom bracket 20 and the front derailleur mounting bracket 18 to the bottom bracket tube 16, because the installer does not need to hold the front derailleur mounting bracket 18 during installation of the bottom bracket 20. While the complementary mounting structure is formed by the mounting projections 18f which are a unitary part of the front derailleur mounting bracket 18, it will be apparent from this disclosure that the mounting projections 18f can have other configurations such as the alternate embodiments disclosed herein.

The mounting projections 18f are configured and arranged to project perpendicularly from the lower attachment portion 18c. In particular, the mounting projections 18f are arranged around the bottom bracket opening 18e in a second circumferential pattern that matches the first circumferential pattern of the slots 16c. Thus, in this embodiment, the mounting projections 18f are uniformly spaced apart around the bottom bracket opening 18e. When the mounting projections 18f are disposed in the slots 16c, the front derailleur mounting bracket 18 is retained in a predetermined rotational orientation and a predetermined axial orientation on an axial end edge of the bottom bracket tube 16 prior to threading of the bottom bracket 20 within the interior threaded passage of the bottom bracket tube 16. Accordingly, the installer needs to only insert a one end of the bottom bracket 20 within the interior threaded passage of the bottom bracket tube 16 to support the front derailleur mounting bracket 18 in the correct orientation. This allows to the installer to let go of the front derailleur mounting bracket 18 and use two hands to install the bottom bracket 20 within the interior threaded passage of the bottom bracket tube 16 with an air wrench.

Still referring to Figures 5 and 6, the front derailleur mounting plate 18 also includes a chain guiding abutment 18h formed integral therewith. This construction prevents the chain 38 from falling between the small sprocket 40 and the front derailleur mounting plate 18. Specifically, this chain 38 guiding abutment 18h is located slightly below teeth of the intermediate sprocket 42, with an upper surface of the chain guiding abutment 18h inclined toward the small sprocket 40. The chain guiding abutment 18h is formed as one piece on the upper derailleur support portion 18d of the second side 18b for guiding the chain 38 to the small sprocket 40 and preventing the chain 38 from falling off the small sprocket 40 when the chain 38 is being shifted from the middle sprocket 42 to the small sprocket 40. As shown in Figure 2, the chain guiding abutment 18h is positioned above the circle defined by the teeth of the small sprocket 40 and has an arcuate shape centered on the center of bottom bracket opening 18f. In this embodiment, the radial position of chain guiding abutment 18h is approximately 6.0 millimeters and more preferably 6.4 millimeters from the circle defined by the teeth of the small sprocket 40. Also, the laterally outermost edge of the chain guiding abutment 18h extends from about forty-five degrees to about eighty-five degrees counterclockwise from a horizontal axis that is perpendicular to a vertical axis that is centered relative to the arcuate inner peripheral surface of stationary frame attachment portion 88 and intersects the center of bottom bracket opening 18f. The chain guiding abutment 18h preferably has a portion disposed at least at approximately sixty-six degrees counterclockwise from the horizontal axis. Consequently, when the chain guide 30 is moved to change the chain 38 from the intermediate sprocket 42 to the small sprocket 40, the chain 38 disengaged from the intermediate sprocket 42 will contact the chain guiding abutment 18h to be guided by its upper surface to the small sprocket 40. In this way, the chain 38 is changed to the small sprocket 40 reliably instead of moving over the small sprocket 40 and falling between the sprocket 40 and the front derailleur mounting plate 18.

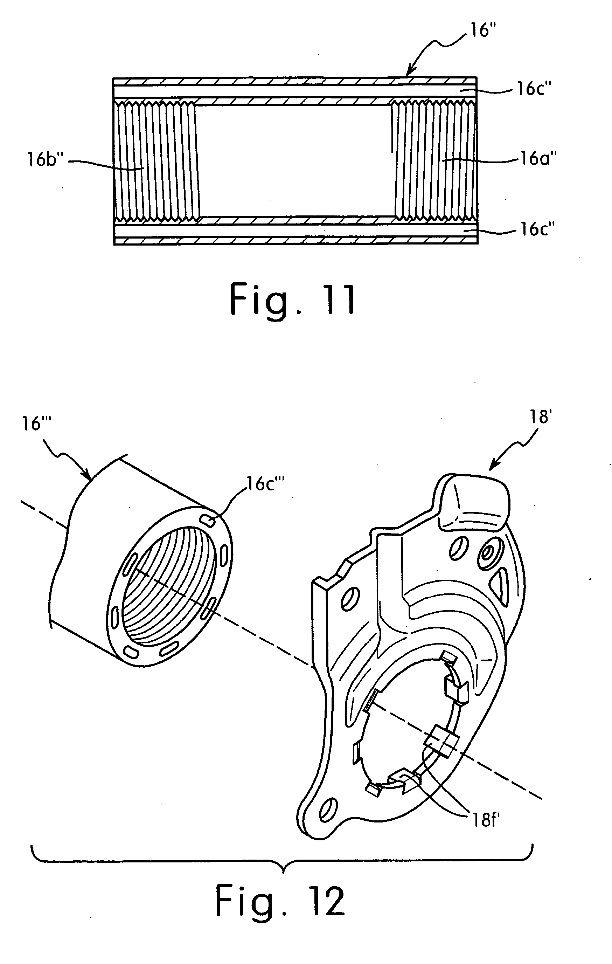

Referring now to Figures 10 and 11, two modified bottom bracket tubes 16' and 16" are illustrated that are used with the front derailleur mounting plate 18 discussed above. The modified bottom bracket tubes 16' and 16" are identical to the bottom bracket tube 16, discussed above except for the complementary mounting structure. Thus, the modified bottom bracket tubes 16' and 16" are selectively installed in the bicycle 10 of Figure 1 in the same manner as the bottom bracket tube 16.

As seen in Figure 10, the modified bottom bracket tube 16' has an interior passage with threaded portions 16a' and 16b' to securely fasten the bottom bracket 20 therein. A first axial end (right side) of the bottom bracket tube 16' has a plurality of slot 16c' that forms a first complementary mounting structure for aiding in the assembly of the bottom bracket 20 and the front derailleur mounting bracket 18 to the bottom bracket tube 16'. The second axial end (left side) of the bottom bracket tube 16' has a plurality of slot 16d' to reduce the weight of the bottom bracket tube 16'.

The slots 16c' are uniformly spaced apart in a first circumferential pattern that corresponds to the circumferential pattern of the mounting projections 18f. In this embodiment, the slots 16c' are blind bores formed in a first axial facing end surface or axial end edge of the bottom bracket tube 16'. The slots 16c' are arc shaped as view in an axial direction along the bottom bracket tube 16' to mate with the mounting projections 18f. Of course, the slots 16c' can have other shapes and arrangements so long as they mate with the mounting projections 18f such that the front derailleur mounting plate 18 can be retained on the bottom bracket tube 16'. In this embodiment, the slots 16c' extend less than half of the axial length of the bottom bracket tube 16'.

The slots 16d' are spaced apart in a third circumferential pattern, which can be either a non-uniform pattern or a uniform pattern. In the illustrated embodiment, the slots 16d' are blind bores that are axially aligned with the slots 16c'. Preferably, the slots 16d' arc shaped as view in an axial direction along the bottom bracket tube 16' and equal in number to the slots 16c'. Moreover, the axial lengths of the slots 16c' and 16d' are preferably equal, with the sum of the axial lengths of the slots 16c' and 16d' being at least greater than half of the axial length of the bottom bracket tube 16'. More preferably, the sum of the axial lengths of the slots 16c' and 16d' being at least equal to or greater than three quarters of the axial length of the bottom bracket tube 16' as shown. In any event, each axial length of the slots 16c' and 16d' is greater than the axial space formed between the adjacent inner ends of the slots 16c' and 16d'.

As seen in Figure 11, the modified bottom bracket tube 16" has an interior passage with threaded portions 16a" and 16b" to securely fasten the bottom bracket 20 therein. In this embodiment, the slots 16c" are through bores extending between opposite axial facing end surfaces of the bottom bracket tube 16". Thus, the slots 16c" extend the full axial length of the bottom bracket tube 16". The slot 16c" that forms a first complementary mounting structure for aiding in the assembly of the bottom bracket 20 and the front derailleur mounting bracket 18 to the bottom bracket tube 16". The slots 16c" are uniformly spaced apart in a first circumferential pattern that corresponds to the circumferential pattern of the mounting projections 18f. In this embodiment, the slots 16c" are arc shaped as view in an axial direction along the bottom bracket tube 16" to mate with the mounting projections 18f. Of course, the slots 16c" can have other shapes so long as they mate with the mounting projections 18f such that the front derailleur mounting plate 18 can be retained on the bottom bracket tube 16". Moreover, the slots 16c" can have a non-uniform pattern if the mounting projections 18f of the front derailleur mounting plate 18 were arranged in a non-uniform pattern.

Referring now to Figure 12, a modified bottom bracket tube 16"' and a modified front derailleur mounting plate 18' are illustrated that form a front derailleur mounting arrangement in accordance with a second embodiment. The bottom bracket tube 16"' and the front derailleur mounting plate 18' are identical to the bottom bracket tube 16 and the front derailleur mounting plate 18, discussed above, except that the complementary mounting structures are arranged in a non-uniform patterns and the cross section of the bottom bracket tube 16"' corresponds to anyone of the cross sections of the bottom bracket tubes 16, 16' or 16" shown in Figures 9-11 with one of the mounting slots on the right end being eliminated. In other words, the bottom bracket tube 16"' has a cross section that corresponds to anyone of the bottom bracket tubes 16, 16' or 16" shown in Figures 9-11, except that one of the mounting slots on the right end has been eliminated as compared to the prior embodiments, and the front derailleur mounting plate 18' is identical the front derailleur mounting plate 18 except that one of the mounting projections 18f has been eliminated as compared to the first embodiment. In view of the similarity between this embodiment and the first embodiment, the descriptions of the parts of the bottom bracket tube 16"' and the front derailleur mounting plate 18' that are identical to the parts of the first embodiment have be omitted for the sake of brevity.

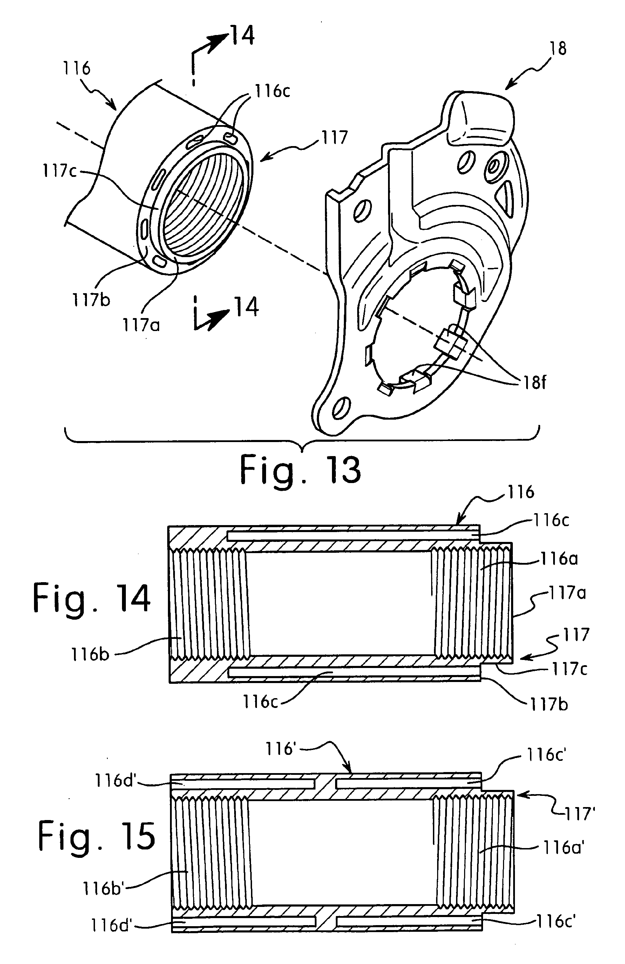

Referring now to Figures 13 and 14, a modified bottom bracket tube 116 is illustrated that is used with the front derailleur mounting plate 18 or 18'. The bottom bracket tube 116 is identical to the bottom bracket tube 16, discussed above, except that the right end has a step shaped end 117 with an outer axially facing surface 117a, an inner axially facing surface 117b and an annular support surface 117c extending between the outer and inner portion axially facing surfaces 117a and 117b. Thus, unless otherwise mention or illustrated, the structure of the bottom bracket tube 116 is identical to the bottom bracket tube 16. In view of the similarity between this embodiment and the prior embodiments, the descriptions of the parts of the bottom bracket tube 116 that are identical to the parts of the first embodiment have be omitted for the sake of brevity.

As seen in Figure 14, the bottom bracket tube 116 has an axial cross section that is identical to the bottom bracket tube 16, except that the right end has the step shaped end 117. The bottom bracket tube 116 has an interior passage with threaded portions 116a and 116b to securely fasten the bottom bracket 20 therein. A first axial end (right side) of the bottom bracket tube 116 has a plurality of slot 116c that forms a first complementary mounting structure for aiding in the assembly of the bottom bracket 20 and the front derailleur mounting bracket 18 to the bottom bracket tube 116. In this embodiment, the slots 116c are blind bores formed in a first axial facing end surface or axial end edge of the bottom bracket tube 116. The slots 116c are arc shaped as view in an axial direction along the bottom bracket tube 16. In this embodiment, the slots 116c extend at least half of the axial length of the bottom bracket tube 16 to reduce the weight of the bottom bracket tube 116. More preferably, the axial lengths of the slots 116c are at least three quarters of the axial length of the bottom bracket tube 116 to reduce the weight of the bottom bracket tube 116.

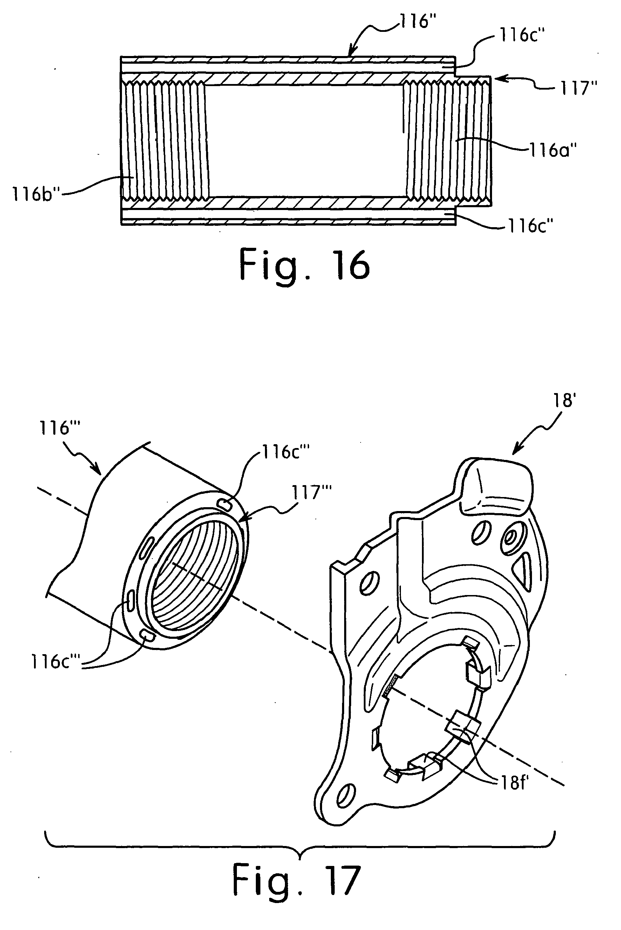

However, the bottom bracket tube 116 can have alternate shapes as seen in Figures 15 and 16. Two modified bottom bracket tubes 116' and 116" are illustrated that are used with the front derailleur mounting plate 18 discussed above. The modified bottom bracket tubes 116' and 116" are identical to the bottom bracket tube 116, discussed above except for the complementary mounting structure. Thus, the modified bottom bracket tubes 116' and 116" are selectively installed in the bicycle 10 of Figure 1 in the same manner as the bottom bracket tube 16.

As seen in Figure 15, the modified bottom bracket tube 116' has an interior passage with threaded portions 116a' and 116b' to securely fasten the bottom bracket 20 therein. A first axial end (right side) of the bottom bracket tube 116' has a step shaped end 117' with a plurality of slot 116c' that forms a first complementary mounting structure for aiding in the assembly of the bottom bracket 20 and the front derailleur mounting bracket 18 to the bottom bracket tube 116'. The second axial end (left side) of the bottom bracket tube 116' has a plurality of slot 116d' to reduce the weight of the bottom bracket tube 116'.

The slots 116c' are uniformly spaced apart in a first circumferential pattern that corresponds to the circumferential pattern of the mounting projections 18f. In this embodiment, the slots 116c' are blind bores formed in a first axial facing end surface or axial end edge of the bottom bracket tube 116'. The slots 116c' are arc shaped as view in an axial direction along the bottom bracket tube 116' to mate with the mounting projections 18f. Of course, the slots 116c' can have other shapes and arrangements so long as they mate with the mounting projections 18f such that the front derailleur mounting plate 18 can be retained on the bottom bracket tube 116'. In this embodiment, the slots 116c' extend less than half of the axial length of the bottom bracket tube 116'.

The slots 116d' are spaced apart in a circumferential pattern, which can be either a non-uniform pattern or a uniform pattern. In the illustrated embodiment, the slots 116d' are blind bores that are axially aligned with the slots 116c'. Preferably, the slots 116d' arc shaped as view in an axial direction along the bottom bracket tube 116' and equal in number to the slots 116c'. Moreover, the axial lengths of the slots 116c' and 116d' are preferably equal, with the sum of the axial lengths of the slots 116c' and 116d' being at least greater than half of the axial length of the bottom bracket tube 116'. More preferably, the sum of the axial lengths of the slots 116c' and 116d' being at least equal to or greater than three quarters of the axial length of the bottom bracket tube 116' as shown. In any event, each axial length of the slots 116c' and 116d' is greater than the axial space formed between the adjacent inner ends of the slots 116c' and 116d'.

As seen in Figure 16, the modified bottom bracket tube 116" has an interior passage with threaded portions 116a" and 116b" to securely fasten the bottom bracket 20 therein. In this embodiment, the right axial end has a step shaped end 117" with a plurality of slots 116c" that are through bores extending between opposite axial facing end surfaces of the bottom bracket tube 116". Thus, the slots 116c" extend the full axial length of the bottom bracket tube 116". The slot 116c" that forms a first complementary mounting structure for aiding in the assembly of the bottom bracket 20 and the front derailleur mounting bracket 18 to the bottom bracket tube 116". The slots 116c" are uniformly spaced apart in a first circumferential pattern that corresponds to the circumferential pattern of the mounting projections 18f. In this embodiment, the slots 116c" are arc shaped as view in an axial direction along the bottom bracket tube 116" to mate with the mounting projections 18f. Of course, the slots 116c" can have other shapes so long as they mate with the mounting projections 18f such that the front derailleur mounting plate 18 can be retained on the bottom bracket tube 116". Moreover, the slots 116c" can have a non-uniform pattern if the mounting projections 18f of the front derailleur mounting plate 18 were arranged in a non-uniform pattern.

Referring now to Figure 17, a modified bottom bracket tube 116"' is illustrated that is specifically used with the front derailleur mounting plate 18'. The bottom bracket tube 116"' is identical to the bottom bracket tube 116, discussed above, except that the complementary mounting structure is arranged in a non-uniform pattern and the cross section of the bottom bracket tube 116"' corresponds to anyone of the cross sections of the bottom bracket tubes 116, 116' or 116" shown in Figures 14-16 with one of the mounting slots on the right end being eliminated. In other words, the bottom bracket tube 116"' has a step shaped end 117"' with a plurality of slots 116c" and a cross section that corresponds to anyone of the bottom bracket tubes 116, 116' or 116" shown in Figures 14-16, except that one of the mounting slots on the right end has been eliminated as compared to the embodiment of Figure 13. In view of the similarity between this embodiment and the prior embodiments, the descriptions of the parts of the bottom bracket tube 16"' are identical to the parts of the prior embodiments have be omitted for the sake of brevity.

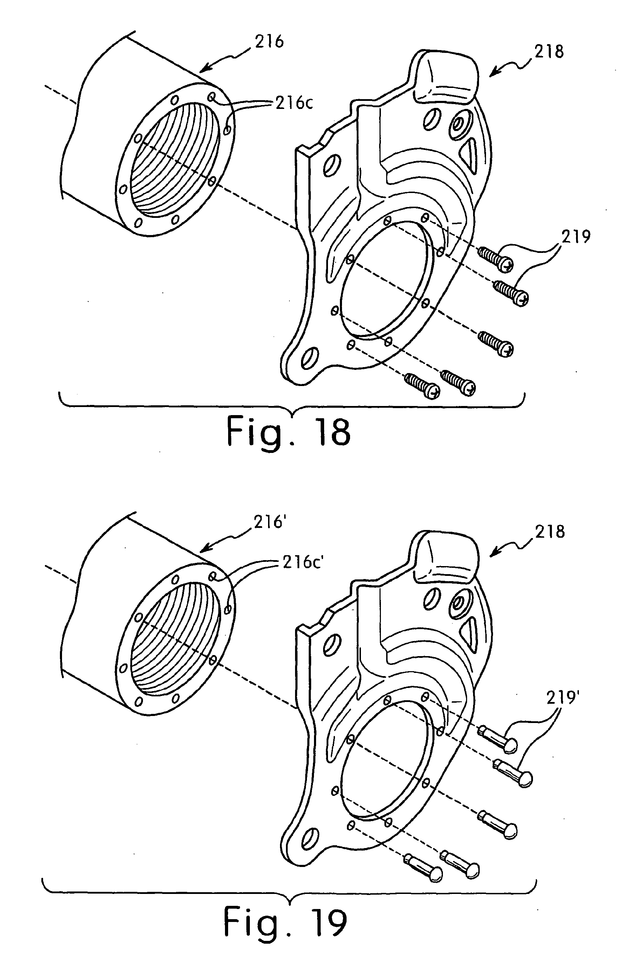

Referring now to Figure 18, a modified bottom bracket tube 216 and a modified front derailleur mounting plate 218 are illustrated that form a front derailleur mounting arrangement in accordance with another embodiment. The bottom bracket tube 216 and the front derailleur mounting plate 218 are identical to the bottom bracket tube 16 and the front derailleur mounting plate 18, discussed above, except that the complementary mounting structures have been modified. Thus, unless otherwise mention or illustrated, the structures of the bottom bracket tube 216 and the front derailleur mounting plate 218 are identical to the bottom bracket tube 16 and the front derailleur mounting plate 218. In view of the similarity between this embodiment and the prior embodiments, the descriptions of the parts of the bottom bracket tube 216 and the front derailleur mounting plate 218 that are identical to the parts of the prior embodiments have be omitted for the sake of brevity.

Basically, the bottom bracket tube 216 has a complementary mounting structure that is formed by a plurality of mounting slots 216c and the front derailleur mounting plate 218 has a complementary mounting structure that is formed by a plurality of fasteners or screws 219. The mounting slots 216c are preferably threaded circular holes. However, the mounting slots 216c can be unthreaded holes that are tapped by the screws 219.

The bottom bracket tube 216 has a cross section that corresponds to anyone of the bottom bracket tubes 16, 16' or 16" shown in Figures 9-11. In alternate embodiments, one of the mounting slots 216c on the right end has been eliminated to create a non-uniform circumferential pattern in which the remaining mounting slots 216c have the configuration of that shown in shown in anyone of Figures 9-11. Moreover, in still other alternate embodiments, the bottom bracket tube 216 has a step shaped right end such as seen in Figure 13 with one of the mounting slot configurations such as seen in Figures 14-15.

Referring now to Figure 19, a modified bottom bracket tube 216' is illustrated that is used with the front derailleur mounting plate 218 in accordance with another embodiment. The bottom bracket tube 216' is identical to the bottom bracket tube 216, discussed above, except that the complementary mounting structures have been modified. Thus, unless otherwise mention or illustrated, the structures of the bottom bracket tube 216' are identical to the bottom bracket tube 216. In view of the similarity between this embodiment and the prior embodiments, the descriptions of the parts of the bottom bracket tube 216' that are identical to the parts of the prior embodiments have be omitted for the sake of brevity.

Basically, the bottom bracket tube 216' has a complementary mounting structure that is formed by a plurality of mounting slots 216c' and the front derailleur mounting plate 218 has a complementary mounting structure that is formed by a plurality of fasteners or rivets 219'. The mounting slots 216c' are preferably unthreaded circular holes that are shaped and sized to receive rivets 219'.

The bottom bracket tube 216' has a cross section that corresponds to anyone of the bottom bracket tubes 16, 16' or 16" shown in Figures 9-11. In alternate embodiments, one of the mounting slots 216c' on the right end has been eliminated to create a non-uniform circumferential pattern in which the remaining mounting slots 216c' have the configuration of that shown in shown in anyone of Figures 9-11. Moreover, in still other alternate embodiments, the bottom bracket tube 216' has a step shaped right end such as seen in Figure 13 with one of the mounting slot configurations such as seen in Figures 14-15.

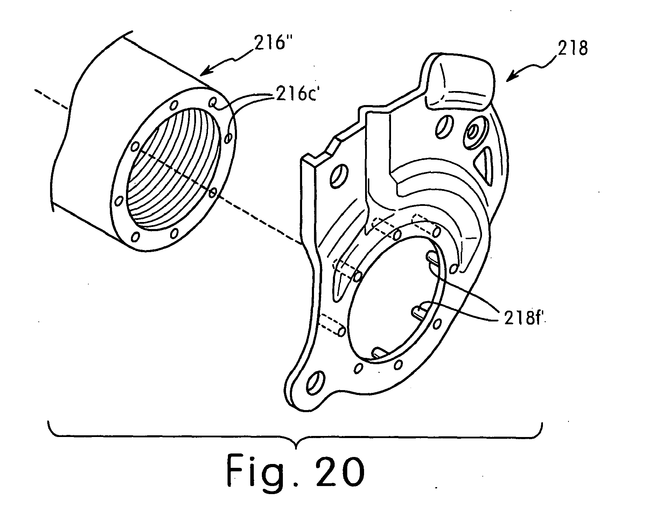

Referring now to Figure 20, a front derailleur mounting plate 218' is illustrated that is used with modified bottom bracket tube 216' in accordance with another embodiment. The front derailleur mounting plate 218' is identical to the front derailleur mounting plate 218, discussed above, except that the complementary mounting structures have been modified. Thus, unless otherwise mention or illustrated, the structures of the front derailleur mounting plate 218' are identical to the front derailleur mounting plate 218. In view of the similarity between this embodiment and the prior embodiments, the descriptions of the parts of the front derailleur mounting plate 218' that are identical to the parts of the prior embodiments have be omitted for the sake of brevity.

Basically, the front derailleur mounting plate 218' has a complementary mounting structure that is formed by a plurality of circular posts or projections 218f that are received in the mounting slots 216c'.

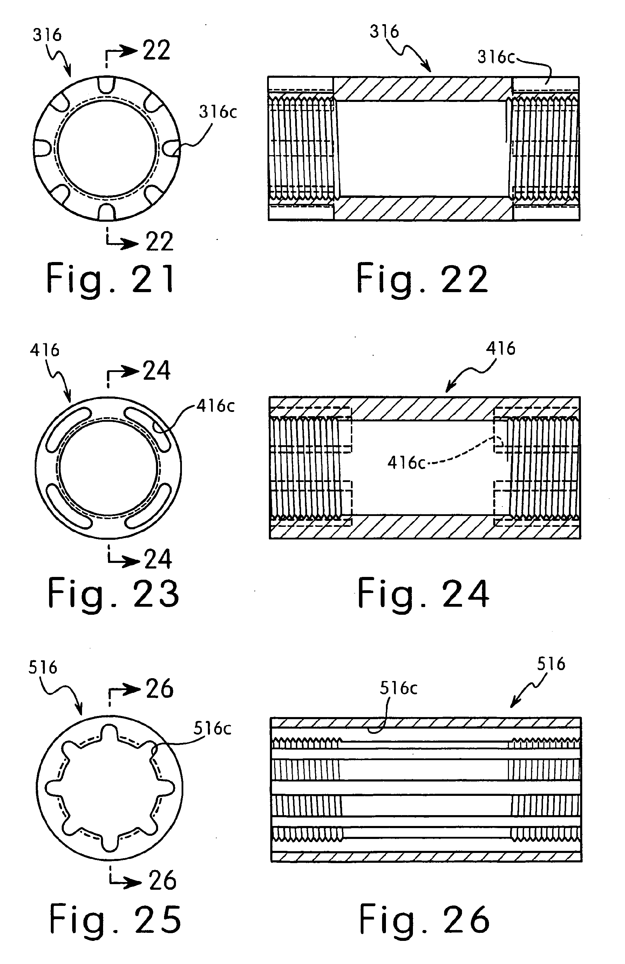

Referring now to Figures 21-26, three modified bottom bracket tubes 316, 416 and 516 are illustrated that are used with anyone the front derailleur mounting plates 218 and 218' discussed above. In other words, the front derailleur mounting plate 218 is mounted the bottom bracket tubes 316, 416 and 516 by either the screws 219 or the rivets 219', while the front derailleur mounting plate 218' is retained on the bottom bracket tubes 316, 416 and 516 by circular posts or projections 218f.

The modified bottom bracket tubes 316, 416 and 516 are identical to the bottom bracket tube 16, discussed above, except for the complementary mounting structure. Thus, the modified bottom bracket tubes 316, 416 and 516 are selectively installed in the bicycle 10 of Figure 1 in the same manner as the bottom bracket tube 16. The bottom bracket tube 316 of Figures 21 and 22 has a plurality of slots 316c are formed in an outer surface of the bottom bracket tube 316. The bottom bracket tube 416 of Figures 23 and 24 has a plurality of slots 416c are formed in the right axial end surface of the bottom bracket tube 416. The bottom bracket tube 516 of Figures 25 and 26 has a plurality of slots 516c are formed in an inner surface of the bottom bracket tube 516.

The terms of degree such as "substantially", "about" and "approximately" as used herein mean a reasonable amount of deviation of the modified term such that the end result is not significantly changed. These terms should be construed as including a deviation of at least ± 5% of the modified term if this deviation would not negate the meaning of the word it modifies.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims and their equivalents.

## Claims

1. A front derailleur mounting arrangement comprising:
a bottom bracket tube (16, 16', 16", 16"', 116, 116', 116", 116"', 216, 216', 316, 416, 516) having an interior passage with a center axis and a plurality of slots (16c, 16c', 16d', 16c", 116c, 116c', 116d', 116c", 216c, 216c', 316c, 416c, 516c); and
a front derailleur mounting bracket (18, 18', 218, 218') including
a lower attachment portion (18c) with a bottom bracket opening (18e) and a complementary mounting structure, and
an upper derailleur support portion (18d) extending from the lower attachment portion (18c) and having a derailleur mounting part (18g),
the complementary mounting structure being configured to mate with the slots to retain the front derailleur mounting bracket (18, 18', 218, 218') in a limited predetermined rotational orientation and a predetermined axial orientation on an axial end edge of the bottom bracket tube prior to threading of a bottom bracket (20) within the interior threaded passage of the bottom bracket tube.

2. The front derailleur mounting arrangement according to claim 1, wherein
the slots includes a plurality of first blind bores formed in a first axial facing end surface of the bottom bracket tube.

3. The front derailleur mounting arrangement according to claim 1 or 2, wherein
the complementary mounting structure is formed by a plurality of non-movable projections (18f, 218f) extending from the front derailleur mounting bracket.

4. The front derailleur mounting arrangement according to claim 3, wherein
the slots are uniformly spaced apart in a first circumferential pattern, and the projections (18f, 218f) are uniformly spaced apart in a second circumferential pattern.

5. The front derailleur mounting arrangement according to claim 3, wherein
the slots are non-uniformly spaced apart in a first circumferential pattern, and the projections (18f, 218f) are non-uniformly spaced apart in a second circumferential pattern.

6. The front derailleur mounting arrangement according to any of claims 2 to 5, wherein the first blind bores extend at least half of the axial length of the bottom bracket tube.

7. The front derailleur mounting arrangement according to any of claims 2 to 6, wherein the bottom bracket tube further includes a plurality of second blind bores extending axially from a second axial facing end surface of the bottom bracket (20).

8. The front derailleur mounting arrangement according to claim 7, wherein the first and second blind bores are substantially equal in axial length.

9. The front derailleur mounting arrangement according to any of the preceding claims, wherein
the slots are formed as through bores extending between opposite axial facing end surfaces of the bottom bracket tube.

10. The front derailleur mounting arrangement according to claim 9, wherein
the complementary mounting structure are non-movable projections (18f, 218f) extending from the front derailleur mounting bracket.

11. The front derailleur mounting arrangement according to any of the preceding claims, wherein
the bottom bracket tube has a step shaped end with an outer axially facing surface, an inner axially facing surface and an annular support surface extending between the outer and inner portion axially facing surfaces.

12. The front derailleur mounting arrangement according to claim 11, wherein
the slots are threaded, and the complementary mounting structure are screws extending from the front derailleur mounting bracket (18, 18', 218, 218').

13. The front derailleur mounting arrangement according to any of claims 1 to 10, wherein the slots are threaded, and the complementary mounting structure are screws extending from the front derailleur mounting bracket (18, 18', 218, 218').

14. The front derailleur mounting arrangement according to claim 13, wherein
the slots are circular in transverse cross section, and the complementary mounting structure are fasteners extending from the front derailleur mounting bracket (18, 18', 218, 218').

15. The front derailleur mounting arrangement according to claim 14, wherein the fasteners are rivets.

16. The front derailleur mounting arrangement according to claim 14, wherein the fasteners are screws.
